# EUROPÄISCHE PATENTSCHRIFT

(11) **EP 2 129 209 B1**
(45) Veröffentlichungstag und Bekanntmachung des Hinweises auf die Patenterteilung: **20.04.2011**
(21) Anmeldenummer: 08707475.3
(22) Anmeldetag: 31.01.2008
(51) Int. Cl.: A01C 15/00

(54) **LANDWIRTSCHAFTLICHE VERTEILMASCHINE**
AGRICULTURAL DISTRIBUTION MACHINE
MACHINE AGRICOLE D'ÉPANDAGE

(30) Priorität: 28.03.2007 DE 102007014791
(43) Veröffentlichungstag der Anmeldung: 09.12.2009
(73) Patentinhaber: Amazonen-Werke H. Dreyer GmbH & Co. KG, 49205 Hasbergen (DE)
(72) Erfinder: PAULSEN, Sven, 27798 Hude (DE); POKRIEFKE, Michael, 27798 Hude (DE); VAN ZOEST, Ralf, 49767 Twist (DE)
(86) Internationale Anmeldenummer: PCT/EP2008/000788
(87) Internationale Veröffentlichungsnummer: WO 2008/116521

(56) Entgegenhaltungen:
- US-A- 4 296 695
- US-A- 4 312 621
- US-A- 5 484 249
- US-A- 5 582 221

## Beschreibung

Die Erfindung betrifft eine landwirtschaftliche Verteilmaschine gemäß des Oberbegriffes des Patentanspruches 1.

Derartige landwirtschaftliche Verteilmaschinen sind in der Praxis bekannt. Diese Verteilmaschinen weisen in der Regel eine relativ große Arbeitsbreite und einen relativ großen und hohen Vorratsbehälter auf. Es ist schwierig ohne eine Befülleinrichtung derartige Vorratsbehälter zu Befüllen. Hierzu verwendet man Befülleinrichtungen, die beispielsweise als Befüllschnecken oder Förderbänder ausgebildet sind. Diese Befülleinrichtungen werden mit einer Schwenkvorrichtung am Rahmen der Verteilmaschine angeordnet, so dass dann über diese Befülleinrichtung der Vorratsbehälter zu Befüllen ist. Um diese Befülleinrichtung aus der Befüllstellung in eine Transportstellung zu bringen, werden diese mit der Schwenkeinrichtung an den Vorratsbehälter herangeschwenkt. Die Anordnung der Befülleinrichtung in der Transportstellung ist bei den bisher bekannt gewordenen Maschinen in den ausgeführten Ausgestaltungen unbefriedigend.

Eine landwirtschaftliche Verteilmaschine mit den im Oberbegriff des Anspruchs 1 definierten Merkmalen ist aus der US 4312621 A bekannt.

Der Erfindung liegt die Aufgabe zugrunde, in einfacher Weise eine kompakte Transportposition für die Verteilmaschine mit der Befülleinrichtung zu erreichen.

Diese Aufgabe wird erfindungsgemäß dadurch gelöst, dass die Befülleinrichtung mit ihrer größten Längserstreckung in Transportsposition oberhalb des Vorratsbehälters in Fahrtrichtung der Verteilmaschine ausgerichtet ist.

Infolge dieser Maßnahme wird die Befülleinrichtung mit der Schwenkeinrichtung auf den Vorratsbehälter geschwenkt und befindet sich dann in dem Raum zwischen den eingeklappten Seitenrahmen. Die Befülleinrichtung wird also in einen Raum gebracht, der von den eingeklappten Seitenrahmen nicht genutzt wird. Somit ergibt sich eine sehr kompakte Transportposition für die Verteilmaschine mit der in Transportposition sich befindlichen Befülleinrichtung.

Um eine sichere Befestigung der Befülleinrichtung in ihrer Transportposition zu gewährleisten ist, ist vorgesehen, dass auf dem Vorratsbehälter Haltevorrichtungen zum Befestigen der Befülleinrichtung in der Transportposition und oberhalb des Vorratsbehälters angeordnet sind.

Weitere Einzelheiten der Erfindung sind den übrigen Unteransprüchen, der Beispielsbeschreibung und den Zeichnungen zu entnehmen. Hierbei zeigen
- Fig. 1: die Verteilmaschine in Arbeitsstellung mit sich in Befüllstellung befindlicher Befülleinrichtung in perspektivischer Darstellung,
- Fig. 2: die Verteilmaschine gemäß Fig. 1 in der Ansicht von vorne,
- Fig. 3: die Verteilmaschine gemäß Fig. 1 in Seitenansicht,
- Fig. 4: die Verteilmaschine mit sich in Zwischenposition befindlicher Befülleinrichtung in Seitenansicht und Prinzipdarstellung, ohne Darstellung der Seitenrahmen,
- Fig. 5: die Verteilmaschine gemäß Fig. 4 in der Vorderansicht,
- Fig. 6: die Verteilmaschine in Seitenansicht und Prinzipdarstellung mit sich in Trans- portstellung befindlicher Befülleinrichtung, ohne Seitenrahmen,
- Fig. 7: die Verteilmaschine gemäß Fig. 6 in Vorderansicht und
- Fig. 8: die Verteilmaschine in Transportstellung und perspektivischer Darstellung.

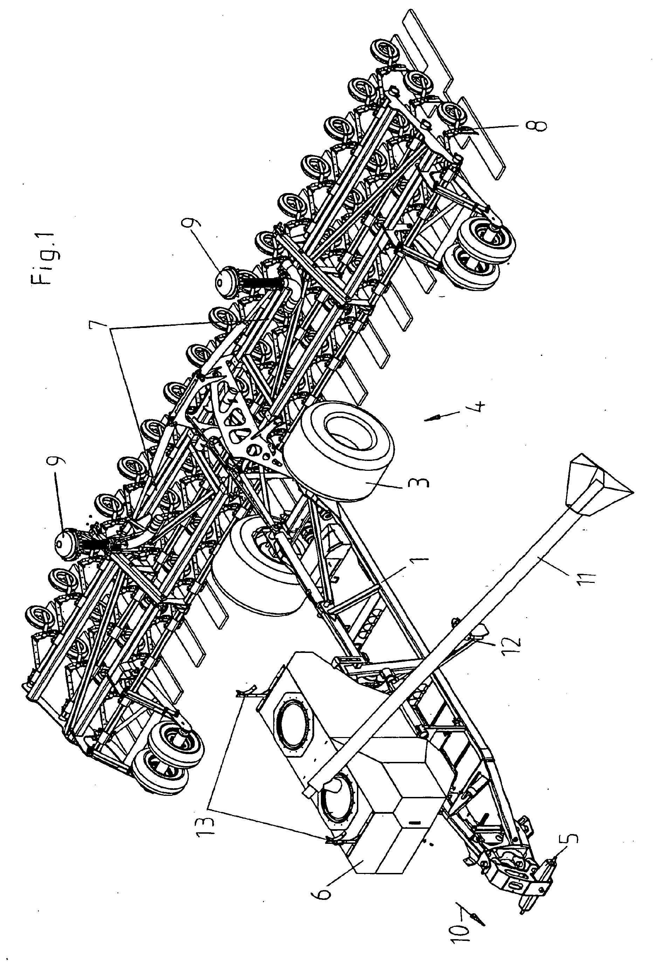

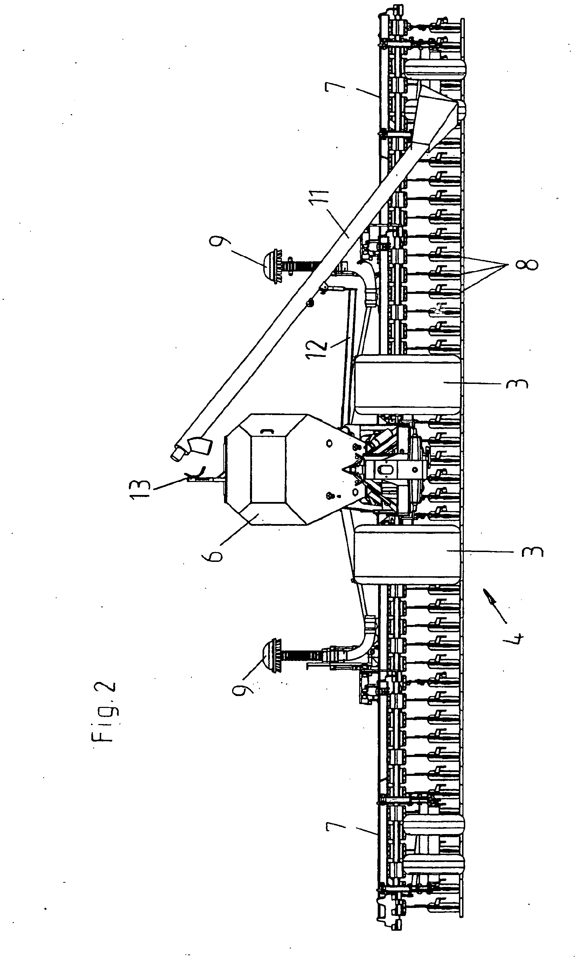

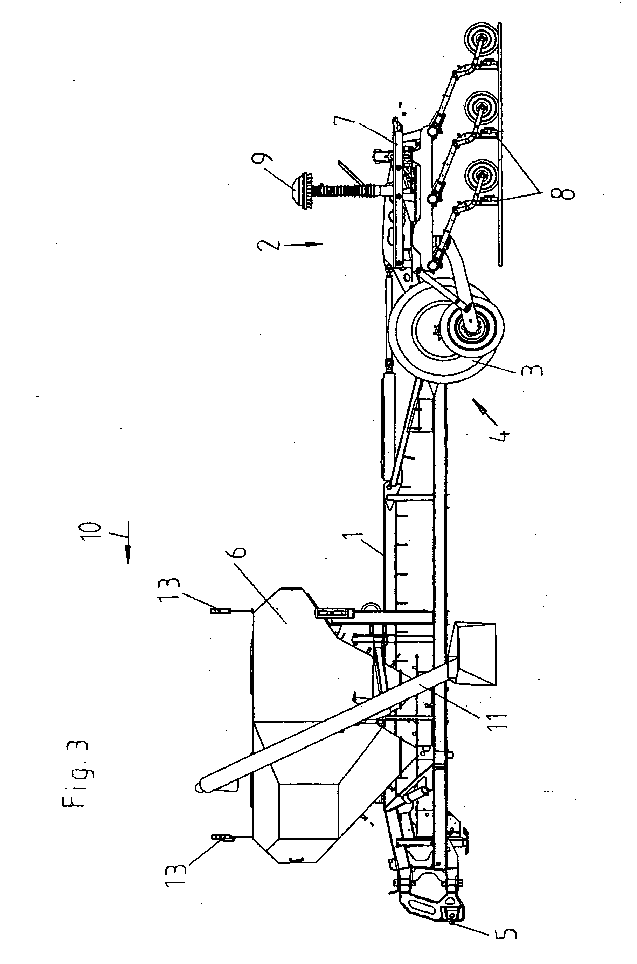

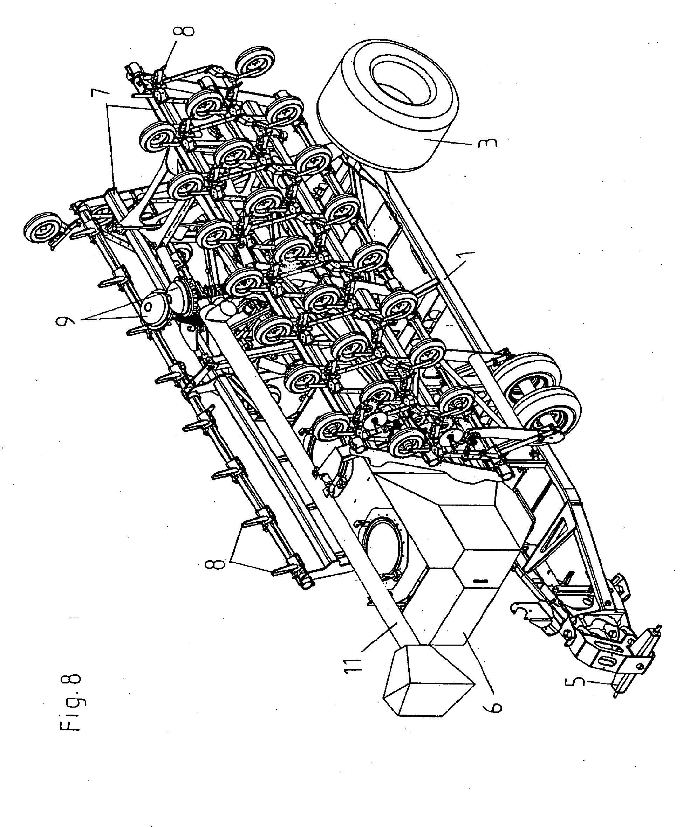

Die als gezogene Sämaschine ausgebildete Verteilmaschine weist den Zentralrahmen 1 auf. Auf der Rückseite 2 des Zentralrahmens 1 ist, dass die Laufräder 3 aufweisende Fahrwerk 4 und auf der Vorderseite die an einem Schlepper anzukuppelnde Anhängevorrichtung 5 angeordnet. Auf dem Zentralrahmen 1 ist im vorderen Bereich der Vorratsbehälter 6 angeordnet. Auf der rückwärtigen Seite des Zentralrahmens 1 sind zwei sich seitlich des Zentralrahmens 1 erstreckende Seitenrahmen 7 mit in den Boden eindringenden Säwerkzeugen 8 angeordnet. Den Säwerkzeugen 8 wird über eine nicht dargestellte Dosiereinrichtung und pneumatische Fördereinrichtung über Schlauchleitungen und der Verteileinrichtung 9 das auszubringende Material, wie Saatgut und/oder Dünger in einstellbaren Mengen zugeführt. Die Seitenrahmen 7 sind aus der in den Fig. 1-3 dargestellten Arbeitspositionen, in welcher sie sich quer zur Fahrtrichtung 10 erstrecken in die in Fig. 8 dargestellte Transportstellung an den Vorratsbehälter 6 heranzuklappen. Die Verteilmaschine weist aufgrund ihrer Seitenrahmen 7 eine größere Breite, die ein Vielfaches der Transportbreite ist, auf.

Um den Vorratsbehälter 6 befüllen zu können, ist der Verteilmaschine eine als Befüllschnecke 11 ausgebildete Befülleinrichtung zugeordnet. Die Befülleinrichtung 11 ist mittels einer als Schwenkhebel 12 ausgebildeten Schwenkeinrichtung an dem Zentralrahmen 1 angeordnet. Die Befülleinrichtung 11 kann in die in Fig. 1-3 dargestellte Befüllposition gebracht werden, in welcher der Vorratsbehälter 6 zu befüllen ist. Die Befülleinrichtung 11 weist eine wesentlich größere Länge als die Transportbreite der Maschine auf.

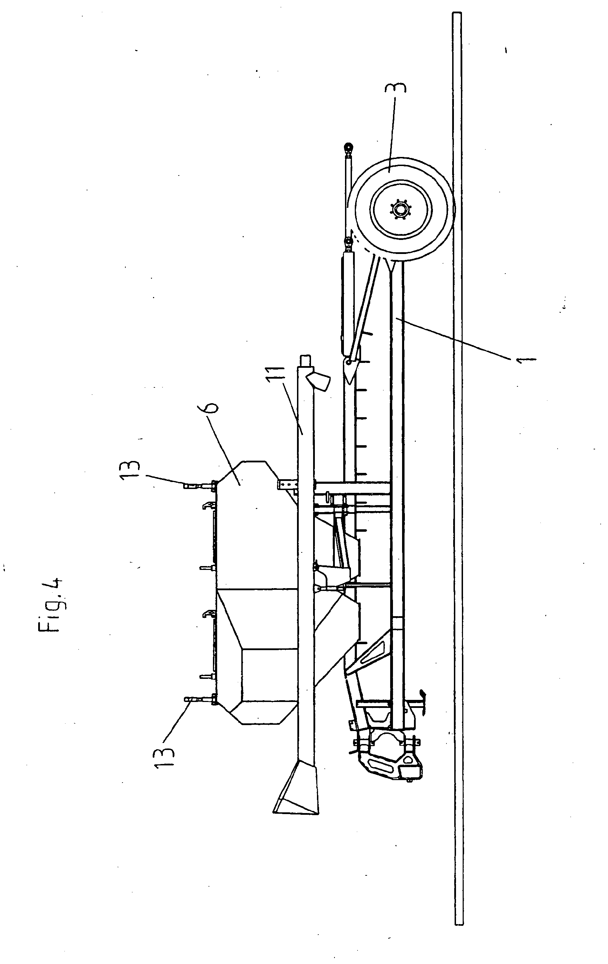

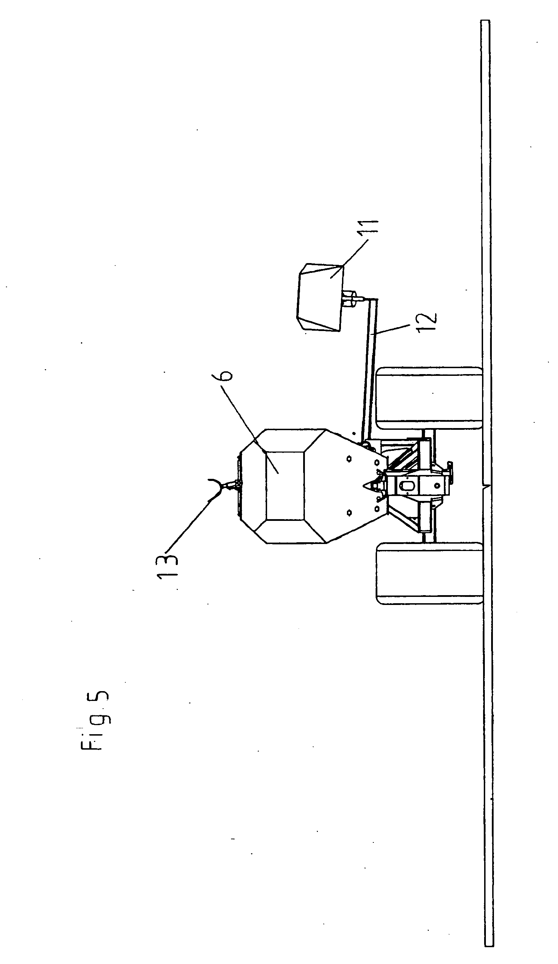

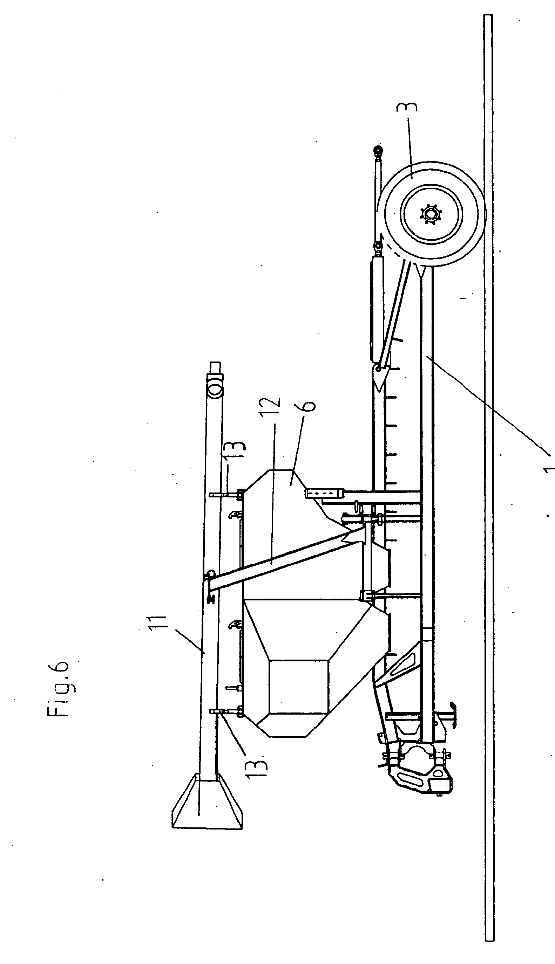

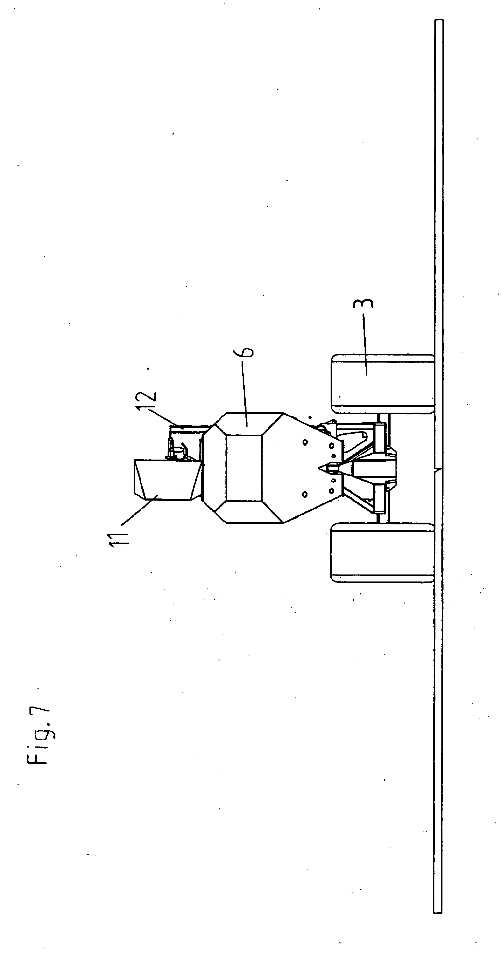

Die Befülleinrichtung 11 ist aus der in den Fig. 1-3 dargestellten Befüllpositionen mittels der Schwenkvorrichtung 12 über die in den Fig. 4-5 dargstellte Zwischenposition in die in den Fig. 6-8 dargestellte und eingeschwenkte Transportstellung oberhalb des Vorratsbehälters 6 zu verbringen.

Um die Befüllschnecke aus der in den Fig. 1-3 dargestellten Befüllposition in die in den Fig. 6-8 dargestellten Transportposition oberhalb des Vorratsbehälters 6 zu verbringen, wird die Befüllschnecke 11 zunächst in einem Zwischenschritt aus der in Fig. 1-3 dargstellten Befüllposition, in der sie schräg aufwärts angeordnet ist, über die Schwenkvorrichtung 12, die am Zentralrahmen 1 angeordnet ist, in die in den Fig. 4-5 dargestellte Position verschwenkt, in welche sie sich horizontal und parallel zum Tragrahmen 1 ausgerichtet ist. Anschließend wird über die Schwenkvorrichtung 12 die Befülleinrichtung 12 aus dieser Zwischenposition gemäß den Fig. 4-5 in die in den Fig. 6-8 dargstellten Transportposition verbracht. Auf dem Vorratsbehälter 6 sind Haltevorrichtungen 13 zum Befestigen der Befülleinrichtung 11 in der Transportposition, in welcher sie sich oberhalb des Vorratsbehälters 6 befindet, angeordnet. Wie aus den Fig. 6-8 zu entnehmen ist, ist die Befülleinrichtung 11 in der Transportposition oberhalb des Vorratsbehälters 6 mit ihrer größten Längserstreckung in Fahrtrichtung 10 der Verteilmaschine ausgerichtet.

Wenn die Befüllschnecke 11 in die Transportposition oberhalb des Vorratsbehälters 6 verbracht ist und mittels der Haltevorrichtungen 13 gesichert ist, werden die Seitenrahmen 7 mit den daran angeordneten Bearbeitungseinrichtungen 8 aus der in den Fig. 1-3 dargstellten Arbeitsposition in die in Fig. 8 dargestellte Transportposition gebracht, in welcher sie sich in Fahrtrichtung 10 erstrecken und sich teilweise seitlich des Vorratsbehälters 6 befinden. Somit befindet sich auch die Befülleinrichtung 11 zwischen den Seitenrahmen 7.

## Patentansprüche

1. Landwirtschaftliche Verteilmaschine mit einem Zentralrahmen (1), einen auf dem Zentralrahmen (1) angeordneten Vorratsbehälter (6) und beidseitig des Zentralrahmens (1) angeordneten und seitlich an dem Vorratsbehälter (6) anklappbaren Seitenrahmen (7), wobei der Verteilmaschine eine sich über eine größere Länge erstreckende Befülleinrichtung (11) zum Befüllen des Vorratsbehälters (6) mit dem auszubringenden Material zugeordnet ist, wobei die Befülleinrichtung (11) mit einer Schwenkeinrichtung (12) am Zentralrahmen (1) angeordnet und aus einer schräg aufwärts ansteigenden Befüllstellung (11) in eine eingeschwenkte Transportstellung verbringbar ist, wobei
die Befülleinrichtung (11) mittels der Schwenkeinrichtung (12) zur Verbringung in die Transportstellung in eine Position oberhalb des Vorratsbehälters (6) und in den Bereich zwischen die eingeklappten Seitenrahmen (7) bringbar ist,
**dadurch gekennzeichnet, dass**
die Befülleinrichtung (11) mit ihrer größten Längserstreckung in Transportsposition oberhalb des Vorratsbehälters (6) in Fahrtrichtung (10) der Verteilmaschine ausgerichtet ist.

2. Verteilmaschine nach Anspruch 1,
**dadurch gekennzeichnet, dass**
die Befülleinrichtung als Befüllschnecke ausgebildet ist.

3. Verteilmaschine nach Anspruch 1,
**dadurch gekennzeichnet, dass**
auf dem Vorratsbehälter (6) Haltevorrichtungen (13) zum Befestigen der Befülleinrichtung (11) in der Transportposition und oberhalb des Vorratsbehälters (6) angeordnet sind.

## Claims

1. Agricultural distribution machine comprising a central frame (1), a storage container (6) arranged on the central frame (1) and side frames (7) arranged on both sides of the central frame (1) and which may be folded down at the side onto the storage container (6), the distribution machine being assigned a filling device (11) extending over a greater length, for filling the storage container (6) with material to be removed, the filling device (11) being arranged with a pivoting device (12) on the central frame (1) and being able to be moved from a filling position (11) rising obliquely upwards into a pivoted-in transport position, the filling device (11) being able to be moved by means of the pivoting device (12) into a position above the storage container (6) and into the region between the folded-in side frames (7), for moving into the transport position, **characterized in that** the filling device (11) is aligned with its greatest longitudinal extent in the transport position above the storage container (6) in the direction of travel (10) of the distribution machine.

2. Distribution machine according to Claim 1, **characterized in that** the filling device is configured as a filling worm.

3. Distribution machine according to Claim 1, **characterized in that** retaining devices (13) are arranged on the storage container (6) for fastening the filling device (11) in the transport position and above the storage container (6).

## Revendications

1. Machine agricole distributrice comportant un châssis central (1) portant un réservoir (6) et de part et d'autre du châssis central (1), des châssis latéraux (7), déployables latéralement par rapport au réservoir (6),
- la machine distributrice ayant une installation de remplissage (11) ayant une longueur importante pour remplir le réservoir (6) avec du produit à distribuer,
- l'installation de remplissage (11) étant montée sur le châssis central (1) par l'intermédiaire d'une installation de basculement (12) en pouvant être déplacée d'une position de remplissage (11) remontant de manière inclinée à une position de transport, rentrée,
- l'installation de remplissage (11) pouvant être mise par l'installation de basculement (12) pour être reliée dans la position de transport, dans une position au-dessus du réservoir (6) et dans la zone située entre les châssis latéraux repliés (7),
machine **caractérisée en ce que**
- l'installation de remplissage (11) est alignée suivant sa plus grande longueur en position de transport au-dessus du réservoir (6) dans la direction de déplacement (10) de la machine distributrice.

2. Machine distributrice selon la revendication 1,
**caractérisée en ce que**
l'installation de remplissage est une vis transporteuse.

3. Machine distributrice selon la revendication 1,
**caractérisée en ce que**
le réservoir (6) comporte des moyens de fixation (13) pour fixer l'installation de remplissage (11) en position de transport et au-dessus du réservoir (6).
